# EUROPEAN PATENT APPLICATION

(11) **EP 3 113 292 A1**
(43) Date of publication of application: **04.01.2017**
(21) Application number: 14883824.6
(22) Date of filing: 22.07.2014
(51) Int. Cl.: H01R 13/516

(54) **ELECTRONIC IDENTITY LABEL SOCKET AND OPTICAL DISTRIBUTION NETWORK DEVICE**

(30) Priority: 25.02.2014 CN 201420080948 U
(71) Applicant: ZTE Corporation, Shenzhen, Guangdong 518057 (CN)
(72) Inventor: ZHANG, Haowen, Shenzhen Guangdong 518057 (CN)
(74) Representative: Carangelo, Pierluigi
(86) International application number: PCT/CN2014/082753
(87) International publication number: WO 2015/127749

(57) **Abstract**

An Electronic Identity (eID) label socket and an Optical Distribution Network (ODN) device are provided, wherein the eID label socket includes: a housing; and an eID label interface set in the housing, wherein the eID label interface is configured to allow insertion and extraction of an eID label. The technical solution solves problems in the related art that an eID label is easy to damage in an existing eID label method so that the existing eID label method is not suitable for reconstruction of a conventional ODN and manual maintenance and device costs are high. Therefore, the eID label is effectively protected, and it is unnecessary to replace an existing optical fiber adapter in a laid conventional ODN, and manual maintenance and device costs are reduced.

## Description

### Technical Field

The embodiments of the disclosure relate to an Electronic Identity (eID) label, particularly to an eID label socket and an Optical Distribution Network (ODN) device.

### Background

An ODN, which is based on a Fiber To The Home (FTTH) optical cable network of a Passive Optical Network (PON) device, is an important component of an FTTH network, functions to provide an optical transmission channel between an Optical Line Terminal (OLT) and an Optical Network Unit (ONU). A traditional ODN optical fiber is deployed and managed manually with low efficiency, and an error is easy to cause, thus resulting in low efficiency utilization of optical fiber resources. At present, an existing intelligent ODN applies a label method, including a two-dimensional code, a wired eID, or Radio Frequency Identification (RFID) and so on to implement efficient optical fiber routing and device management.

Generally, the wired eID label method implants a label containing an Electrically Erasable Programmable Read-Only Memory (EEPROM) in an optical fiber connector. The label is provided with a 1-wire communication interface or other serial communication interfaces connected with a special electronic contact of an optical fiber adapter on a control board, so as to communicate and link with a main control chip on a Printed Circuit Board (PCB) of the control board. Such an optical fiber adapter installed on the PCB needs to be specially customized. Generally, the electronic contact that connects the optical fiber adapter and the eID label applies a spring needle method like an RJ45 socket or a Subscriber Identity Module (SIM) card socket, a contact surface is only a point which provides a small contact area, thus the spring needle may be deformed if the eID label is inserted and extracted repeatedly to cause poor contact easily, and result in a failure in serial communication with the main control chip on the PCB. In addition, although it has obvious advantages in managing optical fiber wiring by introducing the eID method into an ODN, it is necessary to change the optical fiber adapter in a wiring device. Therefore, a large number of regular ODN wiring devices in an existing network fail to use the advantages of intelligent management brought by the eID technology, and a plurality of network management modes is formed simultaneously, which is unfavorable for optimization of a network maintenance system, and is also easy to cause loss of a client base because those quality clients who first receive the FTTH technology fail to enjoy high quality network maintenance services, thus hindering improvement of the benefits of a network service provider. In conclusion, an intelligent ODN based on an existing eID is only applicable to a newly constructed network, but can be hardly applied to a laid conventional ODN. It is also necessary to disconnect a network to as to implement replacement with a new intelligent eID wiring device even if the laid conventional ODN is reconstructed, which results in high cost, also consumes labor and time, further affects normal operation of the network, and is finally unacceptable by both a user and a network operator.

Although the laid conventional ODN may be reconstructed in the RFID label method, an additional RFID read-write module is required, which results in high cost and high power consumption. Besides, wireless connection of the RFID is less reliable than wired connection of the eID method, an RFID air interface is easily interfered by an external signal, and a system may be invaded wirelessly, thus resulting in poor safety performance. The read-write speed of an RFID label is also worse than that of the eID label. Therefore, an RFID-based intelligent ODN is rarely seen in practical application.

An intelligent reconstruction method of an ODN system is provided in the related art. In a method, a barcode label with a unique ID is mounted for each moveable optical fiber connector, and the barcode label is a Quick Response (QR) code label among two-dimensional code labels. It is necessary to add a field operation computer device in an existing optical network, and information of the two-dimensional code label is read by the field operation computer. Although the method may be applied to reconstruction of an old ODN, on-site manual operation is required, it is necessary to add a field device, the external barcode label is easy to damage or lose, thus increasing manual maintenance and device costs, and a true fully-automatic remote monitor intelligent ODN cannot be implemented.

There is no effective solution for the problems above in the related art.

### Summary

Directed at technical problems in the related art that an eID label is easy to damage in an existing eID label method so that the existing eID label method is not suitable for reconstruction of a conventional ODN and manual maintenance and device costs are high and so on, embodiments of the present invention provides an eID label socket and an ODN device to as to as least solve one of the problems above.

An eID label socket is provided according to an embodiment of the present invention so as to achieve the purpose above, including: a housing; and an eID label interface set in the housing, wherein the eID label interface is configured to allow insertion and extraction of an eID label.

In an embodiment of the disclosure, the eID label interface may include: at least one pressing structure; and at least one contact structure, set opposite to the pressing structure, and electrically connected with a control board of a device, wherein the eID label is tightly clamped between the contact structure and the pressing structure when the eID label is inserted into the eID label interface.

In an embodiment of the disclosure, the pressing structure and/or the contact structure may be an elastic component/components.

In an embodiment of the disclosure, the contact structure may be a sheet-shaped structure.

In an embodiment of the disclosure, the pressing structure may be a sheet-shaped structure.

In an embodiment of the disclosure, the pressing structure and/or the contact structure are/is an arched structure/structures.

In an embodiment of the disclosure, there may be at least two contact structures.

In an embodiment of the disclosure, there may be a plurality of pressing structures.

In an embodiment of the disclosure, a height of the housing may be not more than 5 millimeters.

An ODN device is further provided according to an embodiment of the present invention so as to achieve the purpose above, including: a control board, and further including any eID label socket above electrically connected with the control board.

A technical means that includes a housing, and an eID label interface arranged in the housing is provided through the embodiments of the present invention, thus solving technical problems in the related art that an eID label is easy to damage in an existing eID label method so that the existing eID label method is not suitable for reconstruction of a conventional ODN and manual maintenance and device costs are high and so on. Therefore, the eID label is effectively protected, and it is unnecessary to replace an existing optical fiber adapter in a laid conventional ODN, and manual maintenance and device costs are reduced.

### Brief Description of the Drawings

The accompanying drawings described herein are used for providing further understanding to the present invention and form a part of the present application. The schematic embodiments of the present invention and the description thereof are used for explaining the present invention, instead of forming improper limitation thereto. In the accompanying drawings:
Fig. 1 is a structural diagram of an eID label socket according to an embodiment of the present invention;
Fig. 2 is a structural diagram of an eID label socket according to a preferred embodiment of the present invention; and
Fig. 3 is another structural diagram of an eID label socket according to a preferred embodiment of the present invention.

### Detailed Description of the Embodiments

The present invention will be expounded below with reference to the accompanying drawings and in combination with the embodiments. It needs to be noted that the embodiments in the present application and the characteristics in the embodiments may be combined with each other if there is no conflict.

There are technical problems that an eID label is easy to damage in an existing eID label method so that the existing eID label method is not suitable for reconstruction of a conventional ODN and manual maintenance and device costs are high and so on, thus it is necessary to design an intelligent ODN label socket which is not only suitable for constructing a new ODN, but also suitable for reconstruction of an laid conventional ODN, so as to prevent poor contact of a common eID label method. The socket needs to enable all information on an eID label to be controlled by a control board without manual interference and without adding an additional barcode label scanning device. A corresponding solution is provided below so as to achieve the purpose above.

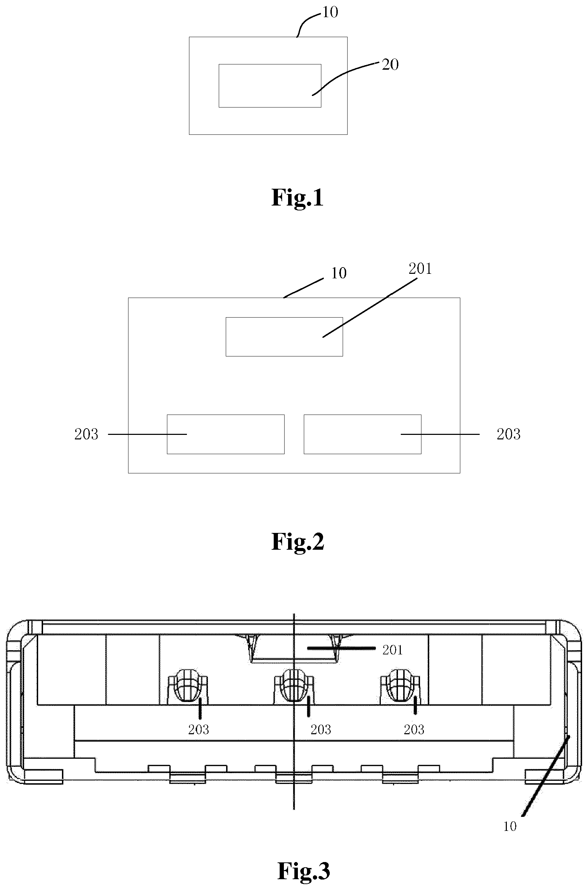

Fig. 1 is a structural diagram of an eID label socket according to an embodiment of the present invention. As shown in Fig. 1, the socket includes: a housing 10; and an eID label interface 20 set in the housing 10, wherein the eID label interface 20 is configured to allow insertion and extraction of an eID label.

The eID label socket formed by the structural features above can solve technical problems that an eID label is easy to damage in an existing eID label method so that the existing eID label method is not suitable for reconstruction of a conventional ODN and manual maintenance and device costs are high and so on. Therefore, the eID label is effectively protected, and it is unnecessary to replace an existing optical fiber adapter in a laid conventional ODN, and manual maintenance and device costs are reduced.

In the present embodiment, there are many methods for implementing the eID interface. For example, the eID label interface may be implemented by a method like a Universal Serial Bus (USB) interface. In a preferred implementation mode of the present embodiment, as shown in Fig. 2, the eID label interface may be implemented by the following structure: the eID label interface 20 includes:
at least one pressing structure 201 and at least one contact structure 203, wherein the contact structure 203 is arranged opposite to the pressing structure 201, electrically connected with a control board of a device, wherein the eID label is tightly clamped between the contact structure and the pressing structure when the eID label is inserted into the eID label interface when the eID label is inserted, wherein that the contact structure and the control board are electrically connected may mean that the contact structure is directly connected with a PCB bonding pad of the control board. Specifically, the contact structure may be connected with the bonding pad directly and may be also connected with the bonding pad by an electric wire. In the meanwhile, when the eID label is inserted and the electrical connection with the eID label is implemented, the contact structure 203 and the pressing structure 201 are connected with a PCB gold finger pad of the eID.

At least one of the pressing structure 201 and the contact structure 203 is an elastic component, thus the eID label may be tightly clamped by an elastic force when the eID label is inserted.

The contact structure may be provided as a sheet-shaped structure so as to increase the contact area and avoid poor contact of the eID label and the socket, but is not limited thereto. The pressing structure 201 may be also provided as a sheet-shaped structure so that the contact between the eID label and the socket are more secure. In the present embodiment, the pressing structure 201 and the contact structure 203 may be provided as spring sheet structures.

In order to tightly pressing the eID label by the pressing structure 201 and the contact structure 203, the pressing structure 201 and/or the contact structure 203 may be provided as arched structures. Of course, convex surfaces of the arched structures may be arranged oppositely at the moment.

In the present embodiment, there are at least two contact structures 203, and there may be one or more, preferably more pressing structures 201. The number of the contact structures 203 may be determined according to the number of electronic contacts in the eID label. The number of the pressing structures 201 may be set according to a practical condition. Specifically, the number of the pressing structures 201 may be determined according to the practical condition, e.g. one pressing structure 201 may be set so as to reduce technical complexity, and a plurality of pressing structures 201 may be set for a purpose of tight pressing. There may be a plurality of pressing structures 201 and contact structures 203 aligned in parallel.

The socket is installed next to a corresponding optical fiber adapter so as to save a space, and the height of the housing 10 is not more than 5 millimeters.

In a preferred implementation mode of the present embodiment, when both the pressing structure 201 and the contact structure 203 are spring sheets, an application process of the eID label socket is as follows: the eID label is inserted or pulled out horizontally from the front of the housing 10. When the eID label is inserted, the eID label is tightly clamped by the pressing spring sheet 201 and the contact spring sheet 203 with the help of an elastic force. After the eID label is pulled out, the pressing spring sheet and the contact spring sheet are restored.

Detailed description will be provided below in combination with a preferred embodiment so that the embodiments above may be better understood.

The present embodiment provides a novel intelligent ODN label socket (i.e. an eID label socket) so as to overcome disadvantages that an eID label method in the traditional art is not suitable for reconstruction of a conventional ODN, connection of an electronic contact has low reliability, a two-dimensional barcode label is easy to damage, manual maintenance and an external label scanning device are required, and an RFID method has high cost, high power consumption, weak interference resistance, and low read-write speed.

As shown in Fig. 3, the intelligent ODN eID label socket provided by the present preferred embodiment includes: a housing 10, a pressing spring sheet 201, and three contact spring sheets 203.

The housing is a cuboid with five sealed faces, and one face opened as an eID interface connected with an eID label. The horizontal width of an opening of the eID interface is applicable to the width of the eID label, and the height of a vertical gap between the pressing spring sheet 201 and the contact spring sheets 203 is applicable to the thickness of the eID labe.

The pressing spring sheet 201 presents an arch shape and the contact spring sheets 203 also present arch shapes. The position of the pressing spring sheet 201 is opposite to the positions of the contact spring sheets 203. When the eID label is inserted, the eID label is tightly clamped by the pressing spring sheet 201 and the contact spring sheets 203 with the help of an elastic force. After the eID is pulled out, the pressing spring sheet 201 and the contact spring sheets 203 are restored.

The contact spring sheets 203 extend out of the housing 10 and are connected with three welding pads (not shown in the figure) corresponding to a control board PCB. The contact spring sheets 203 present the arc shapes. When the eID label is inserted, the contact spring sheets extend, and a contact face with an electronic contact of the eID label is a rectangle which is larger than a point contact face of a common eID spring needle method. Therefore, electronic connection is more reliable. These three welding pads are a 1-Wire communication interface IO signal pad, and a signal ground pad , and another remaining pad should be used as an eID in-place-signal pad or reserved for future use. These three welding pads may be also signal terminals defined by other serial communication protocols. A communication link is created between a main control chip of the control board PCB and the contact spring sheets 203 of the intelligent ODN label socket of the present invention through the welding pads, thus monitoring and controlling information of the eID label remotely without manual interference.

The label socket is installed next to a corresponding optical fiber adapter by means of a gap between the ODN device and the optical fiber adapter or between optical fiber disk bodies. Since the height of the label socket housing 10 is less than 5 millimeters, there is a space for placement and it is unnecessary to replace a conventional ODN optical fiber adapter installed originally. Therefore, the intelligent ODN label socket of the present embodiment can be applied in not only a solution of a newly-constructed intelligent ODN, but also a solution for reconstructing a laid conventional ODN into an intelligent ODN.

In conclusion, based on an eID solution of a conventional intelligent ODN system, an embodiment of the present invention changes a method in which it is necessary to customize an optical fiber adapter for the conventional intelligent ODN system and an electronic contact that contacts an eID label is in the customized optical fiber adapter into a method in which an electronic contact that contacts an eID label is in a label socket, and it is unnecessary to replace an original optical fiber adapter, thus adding a function suitable for reconstructing a laid conventional ODN into an intelligent ODN, and enhancing the connection reliability between the electronic contact of the eID contact and an electronic contact of the label socket of a main control board. Besides, the method of the eID label socket avoids a barcode label that is easy to damage and lose, does not need to add an external scanning device on site and does not need on-site manual operation, and saves manpower as well as device and material cost. The label socket of the present invention is of great economic value and market application value to reconstruct an existing conventional ODN.

An ODN device is further provided in a preferred embodiment, including a control board, and any eID label socket above electrically connected with the control board.

The above are only preferred embodiments of the present invention, but are not used for limiting the present invention. For those skilled in the art, the present invention may have various variations and changes, and any modifications, equivalent replacements, improvements and the like made within the spirit and principles of the present invention should be included in the protection scope of the present invention.

### Industrial Applicability

The technical solution provided by the embodiments of the present invention applies a technical means that includes a housing, and an eID label interface arranged in the housing, thus solving technical problems in the related art that an eID label is easy to damage in an existing eID label method so that the existing eID label method is not suitable for reconstruction of a conventional ODN and manual maintenance and device costs are high and so on. Therefore, the eID label is effectively protected, and it is unnecessary to replace an existing optical fiber adapter in a laid conventional ODN, and manual maintenance and device costs are reduced.

## Claims

1. An Electronic Identity (eID) label socket, comprising:
a housing; and
an eID label interface set in the housing, wherein the eID label interface is configured to allow insertion and extraction of an eID label.

2. The socket as claimed in claim 1, wherein the eID label interface comprises:
at least one pressing structure; and
at least one contact structure, set opposite to the pressing structure, and electrically connected with a control board of a device, wherein the eID label is tightly clamped between the contact structure and the pressing structure when the eID label is inserted into the eID label interface.

3. The socket as claimed in claim 2, wherein the pressing structure and/or the contact structure are/is an elastic component/components.

4. The socket as claimed in claim 2, wherein the contact structure is a sheet-shaped structure.

5. The socket as claimed in claim 2, wherein the pressing structure is a sheet-shaped structure.

6. The socket as claimed in claim 4 or 5, wherein the pressing structure and/or the contact structure are/is an arched structure/structures.

7. The socket as claimed in claim 2, wherein there are at least two contact structures.

8. The socket as claimed in claim 2, wherein there is a plurality of pressing structures.

9. The socket as claimed in claim 1, wherein a height of the housing is not more than 5 millimeters.

10. An Optical Distribution Network (ODN) device, comprising: a control board, and further comprising the Electronic Identity (eID) label socket as claimed in any one of claims 1 to 9, which is electrically connected with the control board.
